(19) Europäisches Patentamt
European Patent Office
Office européen des brevets

(11) **EP 3 333 751 B1**

(12) **EUROPEAN PATENT SPECIFICATION**

(45) Date of publication and mention
of the grant of the patent:
**27.03.2024 Bulletin 2024/13**

(21) Application number: **16306637.6**

(22) Date of filing: **08.12.2016**

(51) International Patent Classification (IPC):
**G06F 21/62** *(2013.01)* **G06F 11/08** *(2006.01)*
**H03M 13/13** *(2006.01)*

(52) Cooperative Patent Classification (CPC):
**G06F 21/6245; H03M 13/136**

(54) **METHOD, SYSTEM AND COMPUTER-READABLE MEDIUM TO RETRIEVE A PRIVATE INFORMATION SYMBOL WITH LOW COMMUNICATION AND STORAGE COMPLEXITY**

VERFAHREN, SYSTEM UND COMPUTERLESBARES MEDIUM ZUM ABRUFEN EINES PRIVATEN INFORMATIONSSYMBOLS MIT GERINGER KOMMUNIKATIONS- UND SPEICHERKOMPLEXITÄT

PROCÉDÉ, SYSTÈME ET SUPPORT LISIBLE PAR ORDINATEUR POUR EXTRAIRE UN SYMBOLE D'INFORMATION PRIVÉE AYANT UNE FAIBLE COMPLEXITÉ DE STOCKAGE ET DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.06.2018 Bulletin 2018/24**

(73) Proprietor: **Alcatel Lucent**
**91620 Nozay (FR)**

(72) Inventor: **ALLOUM, Amira**
**91620 Nozay (FR)**

(74) Representative: **Swindell & Pearson Limited**
**48 Friar Gate**
**Derby DE1 1GY (GB)**

(56) References cited:
**EP-A1- 2 933 943** **US-A1- 2011 191 584**
**US-A1- 2012 246 547**

- **SWASTIK KOPPARTY ET AL: "High-rate codes with sublinear-time decoding", JOURNAL OF THE ASSOCIATION FOR COMPUTING MACHINERY, ACM, NEW YORK, NY, US, vol. 61, no. 5, 8 September 2014 (2014-09-08), pages 1-20, XP058054254, ISSN: 0004-5411, DOI: 10.1145/2629416**
- **OMER BARKOL ET AL: "On Locally Decodable Codes, Self-correctable Codes, and t-Private PIR", 20 August 2007 (2007-08-20), APPROXIMATION, RANDOMIZATION, AND COMBINATORIAL OPTIMIZATION. ALGORITHMS AND TECHNIQUES; [LECTURE NOTES IN COMPUTER SCIENCE], SPRINGER BERLIN HEIDELBERG, BERLIN, HEIDELBERG, PAGE(S) 311 - 325, XP019097726, ISBN: 978-3-540-74207-4 * the whole document ***

## Description

### FIELD OF INVENTION

The present subject matter relates to a method to retrieve a private information. More specifically the present divulgation describes an unconditionally secure multiclient Private Information Retrieval (PIR) protocol. This protocol is cognitive to the code construction and presents a low overhead, a low communication complexity and is robust to collusions.

### BACKGROUND

As we move into what is envisioned as the networked society, novel Information Technology (IT) technologies and architectures are considered for the fifth generation of wireless mobile networks 5G.

In addition to addressing system performance issues, the involved information technology and telecommunication communities investigate how to evolve and develop novel cloud computing solutions for outsourcing data and computations to face major issues like increased demand for computational resources, isolation and multitenancy in the cloud network.

Indeed, a huge amount of hot and cold data is to be generated through cloud mobile sensing, traffic measurements and control signaling. These heterogeneous data are either co-localized at the edge of the network (ex: low latency use cases), or coexist in data centers further in the central cloud while affiliated to multiple operators and belonging to a multitude of users.

These data are for example dedicated to customize and optimize the network and trend resource consumptions based on traffic load and service categories, and could be queried and leveraged either by users or the orchestrator while they are affiliated to different users, cells and cloud or telecommunication operators.

Beside typical security risks, sensitive customer/operator data stored in the cloud face additional threats from curious cloud providers, misbehaving insiders, and malicious tenants. The purpose of the present subject matter is into securing the access to the outsourced data storage, in particular in the context of cloud computing and multi-cloud operators. More precisely the purpose of the present subject matter is to provide a Private Information Retrieval (PIR) solution.

In situations where the sought information is sensitive to the ongoing situation, Private Information Retrieval (PIR) protocols can be used to hide the action by concealing the query and the content of information being retrieved from the server or the cloud operator.

Private Information Retrieval algorithms are categorized based on the assumptions taken for their design, such that computational capability of the server, number of servers or the type of hard problem that constructs the foundation of the algorithm.

Accordingly, most practical existing solutions are computationally secure. By computationally secure we mean a cipher algorithm that cannot be broken with the current computer technology within a period short enough to be practicable.

Information theoretical secure Private Information Retrieval algorithms assume that the adversary (the server/Storage provider) has unbounded computational resources and target to decrease the communication overhead for retrieving the information compared to the trivial solution.

However, information theoretical secure Private Information Retrieval algorithms have often been approached under asymptotical assumption and theoretical studies. For instance, the Locally Decodable Codes (LDC) based Private Information Retrieval protocols are information theoretically secure and most existing constructions are only theoretical.

Consequently, building practical efficient and effective constructions of LDC based Private Information Retrieval protocols, is a novel challenge tackled by academicians and industrials involved in the cloud computing research trend.

Locally decodable codes (LDCs) appeared formally in the article (Katz, Jonathan, and Luca Trevisan. "On the efficiency of local decoding procedures for error-correcting codes." Proceedings of the thirty-second annual ACM symposium on Theory of computing. ACM, 2000). The idea is to retrieve a particular symbol of a message by looking only at a few positions of its encoding. Such a concept has natural applications in Private Information Retrieval (PIR) schemes as well as multiparty computation and average case complexity. Reed Muller codes with the evaluation polynomial approach belong to the LDC family and so can also be used in Private Information Retrieval application.

Locally decodable codes (LDC) allow one to retrieve one symbol of a message by looking at only a small fraction of its encoding, this property is called locality. When the local decoding algorithm retrieves a symbol of the codeword instead of a message symbol, one speaks of locally correctable codes (LCC).

In one embodiment multiplicity codes are used. Multiplicity codes are a construction of high rate LCCS with sublinear locality, they have been proposed in by Kopparty , Saraf and Yekhanin in the article "High-rate codes with sublinear-time decoding." Journal of the ACM (JACM) 61.5 (2014): 28 and are a generalization of the Reed Muller codes (which are LCC also) using derivative.

Multiplicity codes are known for their good coding rate compared to the classical Reed Muller codes in the LCC context. The multiplicity codes can be made systematic for example using the article of Kopparty, Swastik. "List-Decoding Multiplicity Codes." Electronic Colloquium on Computational Complexity (ECCC). Vol. 19. No. 44. 2012 and the article of Augot, Daniel, Françoise Levy-Dit-Vehel, and Cuong M.Ngo. "Information Sets of Multiplicity Codes " ISIT 2015. [0016b] Further relevant prior art is patent document EP2933943.

Compare to the state of the art, the object of the present divulgation is a private information retrieval solution that presents a low overhead, a low communication complexity and is robust to collusions. The solution of the present subject matter also presents the following advantages:

- The method works with any private information retrieval scheme based on multiplicity code
- This solution ensures that every individual server gets no information about the identity of the element the querier is interested in even in case of collusion between the servers.
- The solution can also be used with the data of different users multiplexed together. The fact of multiplexed the data case bring an advantage in terms of storage overhead. The storage overhead can be divided by a factor of (b-1)/(a-1) over the case where one would consider one code per user. With

$$ b = \sum_{i=1}^{u} \frac{1}{R_i} = \sum_{i=1}^{u} \frac{n}{k_i} = \sum_{i=1}^{u} \frac{q^m \sigma_i}{k_i} = \sum_{i=1}^{u} \frac{q^m \sigma}{\binom{m+d_i}{m}} $$

$$ a = \frac{1}{R} = \frac{n}{k} = \frac{q^m \sigma}{\sum_{i=1}^{u} k_i} = \frac{q^m \sigma}{\binom{m+d}{m}} $$

- The communication complexity decreases with a factor depending on locality of the Reed Muller sub codes:

SUMMARY

This summary is provided to introduce concepts related to a method and system to retrieve an information symbol.

In one implementation a method to retrieve an information symbol is described. This method uses a matrix of multiplicity coded symbols of size $\sigma$ lines by $n$ columns. The method comprises a step of determining a column $j$ and a line $i$ of the matrix of coded symbols where the information symbol is located and a step of calculating vectorial indexes $I_j(t)$ for $t$ from 0 to $L \geq q$ - 1 by projecting a vectorial index $p_j$ of the column $j$ of the matrix of coded symbols to a finite affine space $GF(q)^m$ and a step of determining for each vectorial indexes $I_j(t)$ with t from 0 to $L \geq q$ - 1 a column of the matrix of coded symbols, associated to the vectorial indexes $I_j(t)$ and a step of requesting at least one of the elements of the matrix of coded symbols located at the line $i$ of the information symbol and the columns determined during the step of determination and a step of decoding the information symbol using these requested elements.

In another implementation a system to retrieve an information symbol is described. This system uses a matrix of multiplicity coded symbols of size $\sigma$ lines by $n$ columns. The system comprises a module of determining a column $j$ and a line $i$ of the matrix of coded symbols where the information symbol is located and a module of calculating vectorial indexes $I_j(t)$ for $t$ from 0 to $L \geq q$ - 1 by projecting a vectorial index $p_j$ of the column $j$ of the matrix of coded symbols to a finite affine space $GF(q)^m$ and a module of determining for each vectorial indexes $I_j(t)$ with t from 0 to $L \geq q$ - 1 a column of the matrix of coded symbols, associated to the vectorial indexes $I_j(t)$ and a module of requesting at least one of the elements of the matrix of coded symbols located at the line i of the information symbol and the columns determined by the module of determination and a module of decoding the information symbol using these requested elements.

In another implementation a computer-readable medium is described. This computer-readable medium has embodied thereon a method to retrieve an information symbol. The method uses a matrix of multiplicity coded symbols of size $\sigma$ lines by $n$ columns. The method comprises a step of determining a column $j$ and a line $i$ of the matrix of coded symbols where the information symbol is located and a step of calculating vectorial indexes $I_j(t)$ for $t$ from 0 to $L \geq q$ - 1 by projecting a vectorial index $p_j$ of the column $j$ of the matrix of coded symbols to a finite affine space $GF(q)^m$ and a step of determining for each vectorial indexes $I_j(t)$ with t from 0 to $L \geq q$ - 1 a column of the matrix of coded symbols, associated to the vectorial indexes $I_j(t)$ and a step of requesting at least one of the elements of the matrix of coded symbols located at the line $i$ of the information symbol and the columns determined during the step of determination and a step of decoding the information symbol using these requested elements.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents an embodiment of the method object of the present subject matter
Figure 2 presents an embodiment of the system object of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

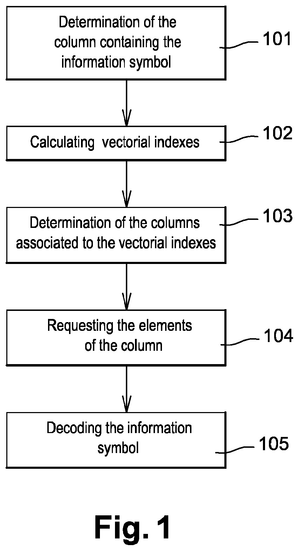

An embodiment of the present subject matter is a method to retrieve an information symbol. This method is described in figure 1. In order to retrieve this information symbol, the method will use a matrix of multiplicity coded symbols of size $\sigma$ lines by $n$ columns. The information symbol is comprised within a column vector so called information symbols vector of size $k$. The matrix of coded symbols is the concatenation of column vectors comprising coded symbols, these column vectors comprising coded symbols being so called coded symbols vectors and having a size $n$. The coded symbols vectors being obtained by multiplicity coding of the information symbols vector,
furthermore

- $n = q^m$ and
- $q$ is a prime number and
- $F_q = \{\alpha_0 \cdots \alpha_{q-1}\}$ is a field of $q$ elements and
- $F[X_1 \cdots X_m] = F[X]$ be the ring of polynomials in the variables $X_1 \cdots X_m$ with coefficients in $F$ and
- $m$ being be the number of variable in the polynomial and
- $\sigma = \binom{m+s-1}{m}$ being the number of Hasse derivatives of the polynomial $F$ where $|i| < s$ for a given $s > 0$ defined as a derivation order. $\sigma$ is expressed in terms of $s$ and m and
- $s$ being the derivation order.

The method comprises the following steps:

- a step 101 of determining a column $j$ and a line $i$ of the matrix of coded symbols where the information symbol is located and
- a step 102 of calculating vectorial indexes $I_j(t)$ for $t$ from 0 to $L \geq q - 1$ by projecting a vectorial index $p_j$ of the column $j$ of the matrix of coded symbols to a finite affine space $GF(q)^m$ and
- a step 103 of determining for each vectorial indexes $I_j(t)$ with t from 0 to $L \geq q - 1$ a column of the matrix of coded symbols, associated to the vectorial index-

es $I_j(t)$ and
- a step 104 of requesting at least one of the elements of the matrix of coded symbols located at the line $i$ of the information symbol and the columns determined during the step 103 of determination and
- a step 105 of decoding the information symbol using these requested elements.

The matric of coded symbols contains $n = q^m$ columns.

Each column index $i$ can be expressed in the basis of a finite affine space of dimension $m$, namely:

- Each index $i$ can be expressed as a m-uple $(i_1,..., i_m)$ according to a canonical basis in $GF(q)^m$ where for any integer $j < $ m + 1 $i_j$ belongs to $GF(q)$.
- The m-uple can be considered as a vectorial index characterizing the points belonging to the affine finite space $GF(q)^m$.

In an equivalent way any point of the space can be expressed as an index by expanding its expression from an $m$-uple of $GF(q)^m$ to the decimal basis.

Example: for $m = 3$ and $q = 2$, 3 can be expressed according to the canonical basis in $GF(2)$ as $(0,1,1)$.

$$(0,1,1) \rightarrow 0 + 1 + 1 * 2 = 3$$

Another aim of the step 102 of calculating vectorial indexes is to compute the needed points for the decoding.

In other words, the method described in the previous section consists on leveraging the fact that the Multiplicity code is based on the Hasse derivatives of a mother Reed Muller code and each coded symbol is a vector including the Reed Muller coded symbol and its Hasse derivatives at the evaluated at the same point.

Each Hasse derivative is equivalent to a Reed Muller Code, accordingly the global vector coded symbol is equivalent to a concatenated Reed Muller codes.

The method previously described uses this nested feature of Multiplicity codes which could be interpreted as concatenated Generalized Reed Muller Code and provide a local decoding per Hasse derivative for the private information retrieval, with a multiplexing of clients to Gasse derivatives in order to ensure isolation in retrieving the data while using a unique code for all the users.

Furthermore, the method previously described does not suffer from collusion issues.

In an embodiment the previously method is implemented using the following architecture is used:

- $u$ different clients $C1, ... ,Cu$.
- $m$ storage providers (for example, cloud storage providers) $SP1,..., SPm$.
- A set of $u$ querieres $Q1,...,Qu$ that are queries to access stored data, in this example we consider as many queries as clients.

- Brokers that can facilitate some operation or perform them on behalf of client or query (not mandatory).

Within this architecture:

- Each client $Ci$ outsources data storage to storage providers using a multiplexing strategy.
- Each queriers $Qi$ wants to access part of the stored data of client $Ci$ and don't want storage providers or other third party to know which data or information it accessed.
- The querier $Qi$ is not supposed to access the data of a client $Cj$ where j≠i.
- Service providers do not implement specific mechanisms to allow private information retrieval.
- Brokers are either trusted or an independent entity depending on the task that they perform.

We consider having a database (composed of $K$ elements for example $E1,...,Ek$). Current solutions encode the database in a codeword (of length $N$ symbols $S1,...,SN$ with $N > K$) and then store $l + 1$ copies of the encoded database at $l + 1$ different servers (where $l$ is the locality of the code).

To retrieve a symbol $Si$ without revealing it, the user has to retrieve one (or multiple depending on the used code) symbol from at least one server (in an embodiment the symbol is retrieve from each server, this embodiment is better for security reasons because it helps to hide where the information is) (None of them being $Si$): the user thus gets $l + 1$ symbols and by local decoding can compute $Si$. The symbols requested are not random, they are chosen according to a decoding algorithm, which indicates that one has to retrieve symbols $Sj(1),..., Sj(l + 1)$ in order to be able to decode $Si$.

The quereier making the request needs to use a systematic construction of an LDC code in order to retrieve the message symbol $Si$.

In an embodiment, the matrix of multiplicity coded symbols is obtain using a systematic coding and wherein the step (101) of determining the column of the matrix is configured to use a design of the systematic code.

In an embodiment the step 102 of calculating vectorial indexes $l_j(t)$ for t from 0 to $L \geq q - 1$ is configured to use the following equation

$$l_j(t) = u * t + p_j$$

for t from 0 to $L \geq q - 1$
wherein $u$ is a random vector of size $m$ and $t$ is a scalar and $p_j$ is the vectorial index of the column $j$ of the matrix of coded symbols the size of $p_j$ being $m$.

In an embodiment, the step 103 of determining for each $l_j(t)$ with t from 0 to $q - 1$ the column of the matrix is configured to use the design of the code.

In an embodiment, the step 105 of decoding the information symbol is configured to use an interpolation algorithm.

In an embodiment the systematic construction of Multiplicity codes is based on an encoding map of Information sets. This has the advantage that if this information set is ignored neither the adversary nor the colluded servers can retrieve the information message.

An embodiment of the present subject matter the method previously described is implemented within a system comprising one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

An embodiment of the present subject matter is a system to retrieve an information symbol using a matrix of multiplicity coded symbols of size $\sigma$ lines by $n$ columns. The information symbol is comprised within a column vector so called information symbols vector of size $k$. The matrix of coded symbols is the concatenation of column vectors comprising coded symbols, these column vectors comprising coded symbols being so called coded symbols vectors and having a size $n$. The coded symbols vectors being obtained by multiplicity coding of the information symbols vector,

furthermore

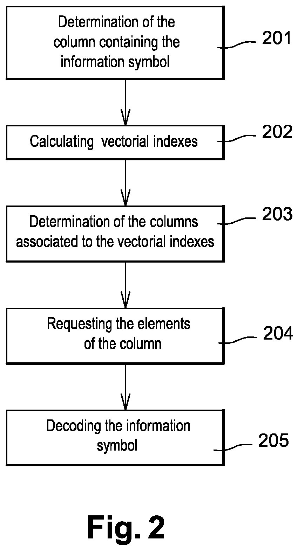

- $n = q^m$ and
- $q$ is a prime number and
- $F_q = \{\alpha_0 \cdots \alpha_{q-1}\}$ is a field of $q$ elements and
- $F[X_1 \cdots X_m] = F[X]$ be the ring of polynomials in the variables $X_1 \cdots X_m$ with coefficients in $F$ and
- $m$ being be the number of variable in the polynomial and
- $\sigma = \binom{m + s - 1}{m}$ being the number of Hasse derivatives of the polynomial $F$ where $|i| < s$ for a given $s > 0$ defined as a derivation order. $\sigma$ is expressed in terms of $s$ and $m$ and
- $s$ being the derivation order

the system, as presented figure 2 comprising:

- a module 201 of determining a column $j$ and a line $i$ of the matrix of coded symbols where the information symbol is located and
- a module 202 of calculating vectorial indexes $l_j(t)$ for t from 0 to $L \geq q - 1$ by projecting a vectorial index $p_j$

of the column *j* of the matrix of coded symbols to a finite affine space $GF(q)^m$ and

- a module 203 of determining for each vectorial indexes $I_j(t)$ with t from 0 to $L \geq q$ - 1 a column of the matrix of coded symbols, associated to the vectorial indexes $I_j(t)$ and
- a module 204 of requesting at least one of the elements of the matrix of coded symbols located at the line *i* of the information symbol and the columns determined by the module 203 of determination and
- a module 205 of decoding the information symbol using these requested elements.

The different module will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter computer-readable medium having embodied thereon a computer program configured to realize the method, presented figure 1, to retrieve an information symbol using multiplicity coded symbols of size $\sigma$ lines by *n* columns.:

The information symbol is comprised within a column vector so called information symbols vector of size *k*. The matrix of coded symbols is the concatenation of column vectors comprising coded symbols, these column vectors comprising coded symbols being so called coded symbols vectors and having a size *n*. The coded symbols vectors being obtained by multiplicity coding of the information symbols vector, furthermore

- $n = q^m$ and
- *q* is a prime number and
- $F_q = \{\alpha_0 \cdots a_{q-1}\}$ is a field of *q* elements and
- $F[X_1 \cdots X_m] = F[X]$ be the ring of polynomials in the variables $X_1 \cdots X_m$ with coefficients in *F* and
- *m* being be the number of variable in the polynomial and

$$\sigma = \binom{m + s - 1}{m}$$

-     being the number of Hasse derivatives of the polynomial *F* where $|i| < s$ for a given $s > 0$ defined as a derivation order. $\sigma$ is expressed in terms of *s* and *m* and
- *s* being the derivation order

The method comprises the following steps:

- a step 101 of determining a column *j* and a line *i* of the matrix of coded symbols where the information symbol is located and
- a step 102 of calculating vectorial indexes $I_j(t)$ for t from 0 to $L \geq q$ - 1 by projecting a vectorial index $p_j$ of the column *j* of the matrix of coded symbols to a finite affine space $GF(q)^m$ and
- a step 103 of determining for each vectorial indexes $I_j(t)$ with t from 0 to $L \geq q$ - 1 a column of the matrix of coded symbols, associated to the vectorial indexes $I_j(t)$ and
- a step 104 of requesting at least one of the elements of the matrix of coded symbols located at the line *i* of the information symbol and the columns determined during the step 103 of determination and
- a step 105 of decoding the information symbol using these requested elements.

**Claims**

1. Computer implemented method to retrieve at least one information symbol, using a matrix of multiplicity coded symbols of size $\sigma$ lines by *n* columns, wherein the matrix of multiplicity coded symbols is based on multiplicity coding of the at least one information symbol, the method comprising:

- a step (101) of determining a column *j* and a line *i* of the matrix of coded symbols where the information symbol is located and
- a step (102) of calculating vectorial indexes *l<sub>j</sub>*(t) for t from 0 to *L* ≥ *q* - 1 by projecting a vectorial index *p<sub>j</sub>* of the column *j* of the matrix of coded symbols to a finite affine space *GF(q)<sup>m</sup>*, wherein *q* is a prime number, and
- a step (103) of determining for each vectorial indexes *l<sub>j</sub>*(t) with t from 0 to *L* ≥ *q* - 1 a column of the matrix of coded symbols, associated to the vectorial indexes *l<sub>j</sub>*(t) and
- a step (104) of requesting at least one of the elements of the matrix of coded symbols located at the line *i* of the information symbol and the columns determined during the step (103) of determination and
- a step (105) of decoding the information symbol using these requested elements.

2. Method according to the claim 1 wherein the matrix of multiplicity coded symbols is obtained using a systematic coding and wherein the step (101) of determining the column of the matrix is configured to use a design of the systematic code.

3. Method according to any of the previous claims wherein the step (102) of calculating vectorial indexes *l<sub>j</sub>*(t) for t from 0 to *L* ≥ *q* - 1 is configured to use the following equation

$$l_j(t) = u * t + p_j$$

for t from 0 to *L* ≥ *q* - 1
wherein *u* is a random vector of size *m* and *t* is a scalar and *p<sub>j</sub>* is the vectorial index of the column *j* of the matrix of coded symbols the size of *p<sub>j</sub>* being *m*.

4. Method according to any of the previous claims wherein the step (103) of determining for each *l<sub>j</sub>*(t) with t from 0 to *q* - 1 the column of the matrix is configured to use the design of the code.

5. Method according to any of the previous claims wherein the step (105) of decoding the information symbol is configured to use an interpolation algorithm.

6. System to retrieve at least one information symbol, using a matrix of multiplicity coded symbols of size *σ* lines by *n* columns, wherein the matrix of multiplicity coded symbols is based on multiplicity coding of the at least one information symbol, the system comprising:

- a module (201) of determining a column *j* and a line *i* of the matrix of coded symbols where the information symbol is located and
- a module (202) of calculating vectorial indexes *l<sub>j</sub>*(t) for t from 0 to *L* ≥ *q* - 1 by projecting a vectorial index *p<sub>j</sub>* of the column *j* of the matrix of coded symbols to a finite affine space *GF(q)<sup>m</sup>*, wherein *q* is a prime number, and
- a module (203) of determining for each vectorial indexes *l<sub>j</sub>*(t) with t from 0 to *L* ≥ *q* - 1 a column of the matrix of coded symbols, associated to the vectorial indexes *l<sub>j</sub>*(t) and
- a module (204) of requesting at least one of the elements of the matrix of coded symbols located at the line *i* of the information symbol and the columns determined by the module (203) of determination and
- a module (205) of decoding the information symbol using these requested elements.

7. System according to the claim 6 wherein the matrix of multiplicity coded symbols is obtain using a systematic coding and wherein the module (201) of determining the column of the matrix is configured to use a design of the systematic code.

8. System according to the claim 6 or 7 wherein the module (202) of calculating vectorial indexes *l<sub>j</sub>*(t) for t from 0 to *L* ≥ *q* - 1 is configured to use the following equation

$$l_j(t) = u * t + p_j$$

for t from 0 to *L* ≥ *q* - 1
wherein *u* is a random vector of size *m* and *t* is a scalar and *p<sub>j</sub>* is the vectorial index of the column *j* of the matrix of coded symbols the size of *p<sub>j</sub>* being m.

9. System according to the claim 6 or 7 or 8 wherein the module (203) of determining for each *l<sub>j</sub>*(t) with t from 0 to *q* - 1 the column of the matrix is configured to is configured to use the design of the code.

10. System according to the claim 6 or 7 or 8 or 9 wherein the module (205) of decoding the information symbol is configured to use an interpolation algorithm.

11. A computer-readable medium having embodied thereon a computer program, configured to realize a method to retrieve at least one information symbol, using a matrix of multiplicity coded symbols of size *σ* lines by *n* columns, wherein the matrix of multiplicity coded symbols is based on multiplicity coding of the at least one information symbol, the method comprising:

- a step (101) of determining a column *j* and a line *i* of the matrix of coded symbols where the information symbol is located and

• a step (102) of calculating vectorial indexes $l_j(t)$ for t from 0 to $L \geq q$ - 1 by projecting a vectorial index $p_j$ of the column $j$ of the matrix of coded symbols to a finite affine space $GF(q)^m$, wherein $q$ is a prime number, and

• a step (103) of determining for each vectorial indexes $l_j(t)$ with t from 0 to $L \geq q$ - 1 a column of the matrix of coded symbols, associated to the vectorial indexes $l_j(t)$ and

• a step (104) of requesting at least one of the elements of the matrix of coded symbols located at the line $i$ of the information symbol and the columns determined during the step (103) of determination and

• a step (105) of decoding the information symbol using these requested elements

12. Computer-readable medium according to the claim 11 wherein the matrix of multiplicity coded symbols is obtain using a systematic coding and wherein the step (101) of determining the column of the matrix is configured to use a design of the systematic code.

13. Computer-readable medium according to the claim 11 or 12 wherein the step (102) of calculating vectorial indexes $l_j(t)$ for t from 0 to $L \geq q$ - 1 is configured to use the following equation

$$ l_j(t) = u * t + p_j $$

for t from 0 to $L \geq q$ - 1
wherein $u$ is a random vector of size $m$ and $t$ is a scalar and $p_j$ is the vectorial index of the column $j$ of the matrix of coded symbols the size of $p_j$ being $m$.

14. Computer-readable medium according to the claim 11 or 12 or 13 wherein the step (103) of determining for each $l_j(t)$ with t from 0 to $q$ - 1 the column of the matrix is configured to is configured to use the design of the code.

15. Computer-readable medium according to the claim 11 or 12 or 13 or 14 wherein the step (105) of decoding the information symbol is configured to use an interpolation algorithm.

**Patentansprüche**

1. Computerimplementiertes Verfahren zum Abrufen mindestens eines Informationssymbols unter Verwendung einer Matrix aus vielfach codierten Symbolen der Größe $\sigma$ Zeilen mal $n$ Spalten, wobei die Matrix aus vielfach codierten Symbolen auf einer Vielfachcodierung des mindestens einen Informationssymbols basiert, wobei das Verfahren Folgendes umfasst:

• einen Schritt (101) des Bestimmens einer Spalte $j$ und einer Zeile $i$ der Matrix codierter Symbole, in der sich das Informationssymbol befindet und

• einen Schritt (102) des Berechnens von vektoriellen Indizes $l_j(t)$ für $t$ von 0 bis $L \geq q$ - 1 durch Projizieren eines vektoriellen Indexes $p_j$ der Spalte $j$ der Matrix codierter Symbole auf einen endlichen affinen Raum $GF(q)^m$, wobei $q$ eine Primzahl ist, und

• einen Schritt (103) des Bestimmens einer den vektoriellen Indizes $l_j(t)$ zugeordneten Spalte der Matrix codierter Symbole für jeden vektoriellen Index $l_j(t)$ mit t von 0 bis $L \geq q$ - 1 und

• einen Schritt (104) des Anforderns mindestens eines der Elemente der Matrix codierter Symbole, die sich in der Zeile $i$ des Informationssymbols und der während des Schrittes (103) des Bestimmens bestimmten Spalte befinden und

• einen Schritt (105) des Decodierens des Informationssymbols unter Verwendung dieser angeforderten Elemente.

2. Verfahren nach Anspruch 1, wobei die Matrix aus vielfach codierten Symbolen unter Verwendung einer systematischen Codierung erhalten wird und wobei der Schritt (101) des Bestimmens der Spalte der Matrix dafür konfiguriert ist, ein Design des systematischen Codes zu verwenden.

3. Verfahren nach einem der vorstehenden Ansprüche, wobei der Schritt (102) des Berechnens der vektoriellen Indizes $l_j(t)$ für $t$ von 0 bis $L \geq q$ - 1 dafür konfiguriert ist, die folgende Gleichung zu verwenden:

$$ l_j(t) = u * t + p_j $$

für $t$ von 0 bis $L \geq q$ - 1
wobei $u$ ein Zufallsvektor der Größe $m$ ist und $t$ ein Skalar ist und $p_j$ der vektorielle Index der Spalte $j$ der Matrix aus codierten Symbolen ist, wobei die Größe von $p_j$ m ist.

4. Verfahren nach einem der vorstehenden Ansprüche, wobei der Schritt (103) des Bestimmens der Spalte der Matrix für jedes $l_j(t)$ mit $t$ von 0 bis $q$ - 1 dafür konfiguriert ist, das Design des Codes zu verwenden.

5. Verfahren nach einem der vorstehenden Ansprüche, wobei der Schritt (105) des Decodierens des Informationssymbols dafür konfiguriert ist, einen Interpolationsalgorithmus zu verwenden.

6. System zum Abrufen mindestens eines Informationssymbols unter Verwendung einer Matrix aus vielfach codierten Symbolen der Größe $\sigma$ Zeilen mal $n$

Spalten, wobei die Matrix aus vielfach codierten Symbolen auf einer Vielfachcodierung des mindestens einen Informationssymbols basiert, wobei das System umfasst:

• ein Modul (201) zum Bestimmen einer Spalte *j* und einer Zeile *i* der Matrix codierter Symbole, in der sich das Informationssymbol befindet und
• ein Modul (202) zum Berechnen von vektoriellen Indizes $l_j(t)$ für *t* von 0 bis $L \geq q - 1$ durch Projizieren eines vektoriellen Indexes $p_j$ der Spalte *j* der Matrix codierter Symbole auf einen endlichen affinen Raum $GF(q)^m$, wobei *q* eine Primzahl ist, und
• ein Modul (203) zum Bestimmen einer den vektoriellen Indizes $l_j(t)$ zugeordneten Spalte der Matrix codierter Symbole für jeden vektoriellen Index $l_j(t)$ mit *t* von 0 bis $L \geq q - 1$ und
• ein Modul (204) zum Anfordern mindestens eines der Elemente der Matrix aus codierten Symbolen, die sich in der Zeile *i* des Informationssymbols und der von dem Modul (203) zum Bestimmen bestimmten Spalte befinden und
• ein Modul (205) zum Decodieren des Informationssymbols unter Verwendung dieser angeforderten Elemente.

7. System nach Anspruch 6, wobei die Matrix aus vielfach codierten Symbolen unter Verwendung einer systematischen Codierung erhalten wird und wobei das Modul (201) zum Bestimmen der Spalte der Matrix dafür konfiguriert ist, ein Design des systematischen Codes zu verwenden.

8. System nach Anspruch 6 oder 7, wobei das Modul (202) zum Berechnens der vektoriellen Indizes $l_j(t)$ für *t* von 0 bis $L \geq q - 1$ dafür konfiguriert ist, die folgende Gleichung zu verwenden:

$$l_j(t) = u * t + p_j$$

für *t* von 0 bis $L \geq q - 1$
wobei u ein Zufallsvektor der Größe *m* ist und *t* ein Skalar ist und p$_j$ der vektorielle Index der Spalte *j* der Matrix aus codierten Symbolen ist, wobei die Größe von p$_j$ *m* ist.

9. System nach Anspruch 6 oder 7 oder 8, wobei das Modul (203) zum Bestimmen der Spalte der Matrix für jedes $l_j(t)$ mit *t* von 0 bis *q - 1* dafür konfiguriert ist, das Design des Codes zu verwenden.

10. System nach Anspruch 6 oder 7 oder 8 oder 9, wobei das Modul (205) zum Decodieren des Informationssymbols dafür konfiguriert ist, einen Interpolationsalgorithmus zu verwenden.

11. Computerlesbares Medium mit einem darauf ausgeführten Computerprogramm, welches konfiguriert zum Durchführen eines Verfahrens zum Abrufen mindestens eines Informationssymbols unter Verwendung einer Matrix aus vielfach codierten Symbolen der Größe $\sigma$ Zeilen mal *n* Spalten, wobei die Matrix aus vielfach codierten Symbolen auf einer Vielfachcodierung des mindestens einen Informationssymbols basiert, wobei das Verfahren Folgendes umfasst:

• einen Schritt (101) des Bestimmens einer Spalte *j* und einer Zeile *i* der Matrix codierter Symbole, in der sich das Informationssymbol befindet und
• einen Schritt (102) des Berechnens von vektoriellen Indizes $l_j(t)$ für *t* von 0 bis $L \geq q - 1$ durch Projizieren eines vektoriellen Indexes $p_j$ der Spalte *j* der Matrix codierter Symbole auf einen endlichen affinen Raum $GF(q)^m$, wobei *q* eine Primzahl ist, und
• einen Schritt (103) des Bestimmens einer den vektoriellen Indizes l$_j$(t) zugeordneten Spalte der Matrix codierter Symbole für jeden vektoriellen Index $l_j(t)$ mit t von 0 bis $L \geq q - 1$ und
• einen Schritt (104) des Anforderns mindestens eines der Elemente der Matrix aus codierten Symbolen, die sich in der Zeile *i* des Informationssymbols und der während des Schrittes (103) des Bestimmens bestimmten Spalte befinden und
• einen Schritt (105) des Decodierens des Informationssymbols unter Verwendung dieser angeforderten Elemente.

12. Computerlesbares Medium nach Anspruch 11, wobei die Matrix aus vielfach codierten Symbolen unter Verwendung einer systematischen Codierung erhalten wird und wobei der Schritt (101) des Bestimmens der Spalte der Matrix dafür konfiguriert ist, ein Design des systematischen Codes zu verwenden.

13. Computerlesbares Medium nach Anspruch 11 oder 12, wobei der Schritt (102) des Berechnens der vektoriellen Indizes $l_j(t)$ für *t* von 0 bis $L \geq q - 1$ dafür konfiguriert ist, die folgende Gleichung zu verwenden:

$$l_j(t) = u * t + p_j$$

für *t* von 0 bis $L \geq q - 1$
wobei *u* ein Zufallsvektor der Größe *m* ist und *t* ein Skalar ist und p$_j$ der vektorielle Index der Spalte *j* der Matrix aus codierten Symbolen ist, wobei die Größe von p$_j$ m ist.

14. Computerlesbares Medium nach Anspruch 11 oder 12 oder 13, wobei der Schritt (103) des Bestimmens der Spalte der Matrix für jedes *l_j(t)* mit *t* von 0 bis *q - 1* dafür konfiguriert ist, das Design des Codes zu verwenden.

**15.** Computerlesbares Medium nach Anspruch 11 oder 12 oder 13 oder 14, wobei der Schritt (105) des Decodierens des Informationssymbols dafür konfiguriert ist, einen Interpolationsalgorithmus zu verwenden.

**Revendications**

**1.** Procédé mis en œuvre par ordinateur pour récupérer au moins un symbole d'information, en utilisant une matrice de symboles codés par multiplicité de taille σ lignes par n colonnes, dans lequel la matrice de symboles codés par multiplicité est basée sur un codage par multiplicité de l'au moins un symbole d'information, le procédé comprenant :

• une étape (101) de détermination d'une colonne j et d'une ligne i de la matrice de symboles codés où se trouve le symbole d'information, et
• une étape (102) de calcul d'index vectoriels $l_j(t)$ pour t de 0 à L ≥ q - 1 en projetant un index vectoriel $p_j$ de la colonne j de la matrice de symboles codés dans un espace affine fini $GF(q)^m$, dans lequel q est un nombre premier, et
• une étape (103) de détermination pour chaque index vectoriel $l_j(t)$ avec t de 0 à L ≥ q - 1, d'une colonne de la matrice de symboles codés associée aux index vectoriels $l_j(t)$, et
• une étape (104) de demande d'au moins un des éléments de la matrice de symboles codés situés à la ligne i du symbole d'information, et aux colonnes déterminées au cours de l'étape (103) de détermination, et
• une étape (105) de décodage du symbole d'information en utilisant ces éléments demandés.

**2.** Procédé selon la revendication 1, dans lequel la matrice de symboles codés par multiplicité est obtenue en utilisant un codage systématique, et dans lequel l'étape (101) de détermination de la colonne de la matrice est configurée pour utiliser une conception du code systématique.

**3.** Procédé selon l'une quelconque des revendications précédentes, dans lequel l'étape (102) de calcul d'index vectoriels $l_j(t)$ pour t de 0 à L ≥ q - 1 est configurée pour utiliser l'équation suivante

$$l_j(t) = u*t + p_j$$

pour t de 0 à L ≥ q - 1

où u est un vecteur aléatoire de taille m et t est un scalaire et $p_j$ est l'index vectoriel de la colonne j de la matrice de symboles codés, la taille de $p_j$ étant m.

**4.** Procédé selon l'une quelconque des revendications précédentes, dans lequel l'étape (103) de détermination pour chaque $l_j(t)$ avec t de 0 à q - 1 de la colonne de la matrice est configurée pour utiliser la conception du code.

**5.** Procédé selon l'une quelconque des revendications précédentes, dans lequel l'étape (105) de décodage du symbole d'information est configurée pour utiliser un algorithme d'interpolation.

**6.** Système pour récupérer au moins un symbole d'information, en utilisant une matrice de symboles codés par multiplicité de taille σ lignes par n colonnes, dans lequel la matrice de symboles codés par multiplicité est basée sur un codage par multiplicité de l'au moins un symbole d'information, the système comprenant :

• un module (201) de détermination d'une colonne j et d'une ligne i de la matrice de symboles codés où se trouve le symbole d'information, et
• un module (202) de calcul d'index vectoriels $l_j(t)$ pour t de 0 à L ≥ q - 1 en projetant un index vectoriel $p_j$ de la colonne j de la matrice de symboles codés dans un espace affine fini $GF(q)^m$, dans lequel q est un nombre premier, et
• un module (203) de détermination, pour chaque index vectoriel $l_j(t)$ avec t de 0 à L ≥ q - 1, d'une colonne de la matrice de symboles codés associée aux index vectoriels $l_j(t)$, et
• un module (204) de demande d'au moins un des éléments de la matrice de symboles codés situés à la ligne i du symbole d'information, et aux colonnes déterminées par le module (203) de détermination, et
• un module (205) de décodage du symbole d'information en utilisant ces éléments demandés.

**7.** Système selon la revendication 6, dans lequel la matrice de symboles codés par multiplicité est obtenue en utilisant un codage systématique, et dans lequel le module (201) de détermination de la colonne de la matrice est configuré pour utiliser une conception du code systématique.

**8.** Système selon la revendication 6 ou 7, dans lequel le module (202) de calcul d'index vectoriels $l_j(t)$ pour t de 0 à L ≥ q - 1 est configuré pour utiliser l'équation suivante

$$l_j(t) = u*t + p_j$$

pour t de 0 à L ≥ q - 1
où u est un vecteur aléatoire de taille m et t est un scalaire et $p_j$ est l'index vectoriel de la colonne j de la matrice de symboles codés, la taille de $p_j$ étant m.

9. Système selon la revendication 6 ou 7 ou 8, dans lequel le module (203) de détermination pour chaque $l_j(t)$ avec t de 0 à q - 1 de la colonne de la matrice est configuré pour utiliser la conception du code.

10. Système selon la revendication 6 ou 7 ou 8 ou 9, dans lequel le module (205) de décodage du symbole d'information est configuré pour utiliser un algorithme d'interpolation.

11. Support lisible par ordinateur sur lequel est incorporé un programme informatique, configuré pour réaliser un procédé pour récupérer au moins un symbole d'information, en utilisant une matrice de symboles codés par multiplicité de taille σ lignes par n colonnes, dans lequel la matrice de symboles codés par multiplicité est basée sur un codage par multiplicité de l'au moins un symbole d'information, le procédé comprenant :

   • une étape (101) de détermination d'une colonne j et d'une ligne i de la matrice de symboles codés où se trouve le symbole d'information, et
   • une étape (102) de calcul d'index vectoriels $l_j(t)$ pour t de 0 à L ≥ q - 1 en projetant un index vectoriel $p_j$ de la colonne j de la matrice de symboles codés dans un espace affine fini $GF(q)^m$, dans lequel q est un nombre premier, et
   • une étape (103) de détermination pour chaque index vectoriel $l_j(t)$ avec t de 0 à L ≥ q - 1, d'une colonne de la matrice de symboles codés associée aux index vectoriels $l_j(t)$, et
   • une étape (104) de demande d'au moins un des éléments de la matrice de symboles codés situés à la ligne i du symbole d'information, et aux colonnes déterminées au cours de l'étape (103) de détermination et
   • une étape (105) de décodage du symbole d'information en utilisant ces éléments demandés.

12. Support lisible par ordinateur selon la revendication 11, dans lequel la matrice de symboles codés par multiplicité est obtenue en utilisant un codage systématique, et dans lequel l'étape (101) de détermination de la colonne de la matrice est configurée pour utiliser une conception du code systématique.

13. Support lisible par ordinateur selon la revendication 11 ou 12, dans lequel l'étape (102) de calcul d'index vectoriels $l_j(t)$ pour t de 0 à L ≥ q - 1 est configurée pour utiliser l'équation suivante

$$l_j(t) = u*t + p_j$$

pour t de 0 à L ≥ q - 1
où u est un vecteur aléatoire de taille m et t est un scalaire et $p_j$ est l'index vectoriel de la colonne j de la matrice de symboles codés, la taille de $p_j$ étant m.

14. Support lisible par ordinateur selon la revendication 11 ou 12 ou 13, dans lequel l'étape (103) de détermination pour chaque $l_j(t)$ avec t de 0 à q - 1 de la colonne de la matrice est configurée pour utiliser la conception du code.

15. Support lisible par ordinateur selon la revendication 11 ou 12 ou 13 ou 14 dans lequel l'étape (105) de décodage du symbole d'information est configurée pour utiliser un algorithme d'interpolation.

```
┌─────────────────────┐
│  Determination of the│ ── 101
│  column containing the│
│  information symbol  │
└─────────────────────┘
          │
          ▼
┌─────────────────────┐
│ Calculating  vectorial indexes│ ── 102
└─────────────────────┘
          │
          ▼
┌─────────────────────┐
│ Determination of the columns│ ── 103
│ associated to the vectorial indexes│
└─────────────────────┘
          │
          ▼
┌─────────────────────┐
│  Requesting the elements│ ── 104
│  of the column      │
└─────────────────────┘
          │
          ▼
┌─────────────────────┐
│  Decoding the information│ ── 105
│  symbol             │
└─────────────────────┘
```

# Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2933943 A

**Non-patent literature cited in the description**

- **KATZ, JONATHAN ; LUCA TREVISAN.** On the efficiency of local decoding procedures for error-correcting codes. *Proceedings of the thirty-second annual ACM symposium on Theory of computing. ACM,* 2000
- **KOPPARTY ; SARAF ; YEKHANIN.** High-rate codes with sublinear-time decoding. *Journal of the ACM (JACM),* 2014, vol. 61 (5), 28
- **KOPPARTY ; SWASTIK.** List-Decoding Multiplicity Codes. *Electronic Colloquium on Computational Complexity (ECCC),* 2012, vol. 19 (44
- **AUGOT, DANIEL ; FRANÇOISE LEVY-DIT-VEHEL ; CUONG M.NGO.** Information Sets of Multiplicity Codes. *ISIT,* 2015